(19) **Europäisches Patentamt / European Patent Office / Office européen des brevets**

(11) **EP 4 679 046 A1**

(12) **EUROPEAN PATENT APPLICATION**

(43) Date of publication:
14.01.2026 Bulletin 2026/03

(51) International Patent Classification (IPC):
*G01L 1/18* [(2006.01)]

(21) Application number: 24382736.7

(52) Cooperative Patent Classification (CPC):
G01L 1/18

(22) Date of filing: 09.07.2024

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(71) Applicant: Universidad de Salamanca
37008 Salamanca (ES)

(72) Inventors:
- Caridad Hernández, José Manuel
  37008 Salamanca (ES)
- Castelló Nieto, Óscar
  37008 Salamanca (ES)
- López Baptista, Sofía Margarita
  37008 Salamanca (ES)

(74) Representative: Pons IP
Glorieta Rubén Darío 4
28010 Madrid (ES)

(54) **IN-PLANE FLEXIBLE PRESSURE SENSOR WITH ENHANCED SENSITIVITY**

(57) The present invention belongs to the field of sensors, and more precisely discloses a flexible pressure sensor measured via an in-plane (e.g. coplanar) configuration comprising at least one piezoresistive material layer and at least a substrate made of a flexible, compressible and non-electrically conductive polymer. The pressure sensor of the invention presents both high flexibility as well as improved pressure sensitivity, compared to other pressure sensors of the state of the art.

EP 4 679 046 A1

## Description

The present invention belongs to the field of sensors, and more precisely discloses a flexible pressure sensor measured via an in-plane (e.g. coplanar) configuration comprising at least one piezoresistive material layer and at least a substrate made of a flexible, compressible and non-electrically conductive polymer. The pressure sensor of the invention presents both high flexibility as well as improved pressure sensitivity, compared to other pressure sensors of the state of the art.

## BACKGROUND ART

Ultra-flexible pressure sensors (including tactile sensors) are emerging devices to be used in a wide range of applications where they play an important role such as the internet of things (IoT), augmented reality, robotics, health monitoring [Kohshmanesch, F. et al. Biosens. Bioelectron. 176, 112946, (2001); Kim Y. & Oh, J. H., Applied Sciences 10 (2020)], realization of e-skins [Hua. Q. et al. Nat. Commun. 9, 244 (2018)], augmented reality [Wang, S. et al. Nature 555, 83-88 (2018), human-machine interfaces (Kim Y. & Oh, J. H., Applied Sciences 10 (2020)], medical implants or limb prosthetics. [Kohshmanesch, F. et al. Biosens. Bioelectron. 176, 112946, (2001); Hopkins, M. et al., IEEE Sens. J. 20, 6992-7000 (2020); Kang, S.-K et al. Nature 530, 71-76 (2016)]; and other novel technologies in the field of flexible electronics. Therefore, there is an increasing interest in the development of robust bendable and stretchable pressure sensors for wearable e-devices.

There are several ways of transducing mechanical forces into electrical signals, including different mechanisms such as piezoresistivity (perhaps the most common), capacitance, piezoelectricity, and triboelectricity [Duan Y. et al. Nanomaterials 12 (2922); Pyo, S. et al. Advanced Materials 33, 2005902 (2011); Liu, M.-Y et al. Nano Energy 87, 106181 (2021)]. For this energy transformation active sensing materials are indispensable.

Typical flexible piezoresistive systems involve the use of conducting nanoparticles (eg carbon nanotubes [ Dani H. & Thostenson, E. T., ACS Appl. Mater. Interfaces 11, 48370-48383 (2019)], graphene [Tao, L.-Q. et al. ACS Nano 11, 8790-8795 (2017);] or nanostructures made from different metals [Kenry Yeo et al. Microsyst. Nanoeng. 2, 16043 (2016)] or semiconductors [Kenry Yeo et al. Microsyst. Nanoeng. 2, 16043 (2016)] embedded in a flexible polymer film.

Furthermore, for a chosen active sensing material, the way electrical measurements are performed is important in these systems.

There are two types of arrangements clearly differentiated in the conversion of the pressure of the sensor device into an electrical signal: an out-of-plane measurement and an in-plane type of measurement.

The out of plane configuration pressure sensors consist of architectures containing a flexible pressure-sensitive film which is the active sensing material (commonly made from nanocomposites) surrounded (on top and bottom) by conductive metal interconnects which compromise the overall flexibility of these systems, being this a problem for the fabrication of flexible pressure detectors, including tactile sensors. The application of pressure in these systems is done in the same direction as the injection current which is modified by the pressure applied to the film (in the direction perpendicular to the film). Hence, the out-of-plane configuration is based on vertical electrical measurements (perpendicular to the plane of the film) undertaken when applying a vertical pressure in the active sensing materials. In these sensors, the direction of the pressure and injection current are thus parallel. An example of pressure sensors in such an out of plane configuration is, for instance, the case of individual pressure sensors measured in an out-of-plane configuration arranged in an array structure which aims to achieve more advanced sensing functionalities as tactile sensors. However, such tactile sensor arrays is comprised by many electrodes and cables, and require a pressure insensitive and conductor material (usually a metal) on top and bottom of the overall architecture, which causes a notable reduction in their flexibility and stretching capacity, as well as their reliability and durability [Chang Yang, J et al. Adv. Mater 31, 1904765 (2019)]; [Won P. et al. Adv. Mater 33, 2002397 (2021)].

Another configuration is the in-plane configuration for pressure sensors, in which metal interconnects for electrical measurements are only placed at the boundaries of the active sensing material and hence allow a notably higher flexibility of the device. In this configuration, the pressure is still applied perpendicular to the flexible pressure-sensitive film acting as sensitive material (commonly made from nanocomposites), but the electrical current (and hence the realization of electrical measurements) flows along the material (i.e. in the plane of the film) and thus in the direction perpendicular to that of the applied pressure. This method of pressure measurement with piezoresistive materials has been less studied and, so far, these sensors have shown less sensitivity. For instance, some existing studies [Dai, H. Thostenson et al. ACS Appl. Mater. Interfaces 11, 48370-48380 (2019)] only achieve a limited sensitivity (maximum $1.7 \cdot 10^{-4} KPa^{-1}$) in the entire measured range (0-5MPa).

Hence, this in-plane configuration presents the advantage of avoiding the need for metal interconnects on top or below the active sensing material films, which allows a notably higher flexibility of the pressure sensor and improves its reliability and/or durability. However, in this configuration, the film is less sensitive to the externally-applied pressure, and hence generates a lower electrical signal as compared to the out-of-plane configuration.

In summary, the out-of-plane configuration presents flexibility and durability problems, while the in-plane configuration presents pressure sensitivity issues.

In fact, there are currently no pressure sensors in the market that can provide both high-flexibility and high-pressure sensitivity simultaneously, so no highly-sensitive and highly-flexible pressure sensors are yet possible. In other words, the existing pressure sensor devices are either sensitive but rather rigid, or flexible but with a low sensitivity.

In this invention, the goal is to overcome the limitations of the state of the art and present a high-flexibility and high-pressure sensitivity pressure sensor.

## SUMMARY OF THE INVENTION

The present invention discloses a novel tactile sensor which is both highly flexible and presents increased pressure sensitivity. The tactile sensor is in an in-plane readout configuration (ensuring thus high-flexibility) and is made by combining at least a piezoresistive material layer placed on top of a substrate made of a flexible and compressible non-electrically conductive polymer (which, as demonstrated here, provides an enhanced sensitivity in the overall device).

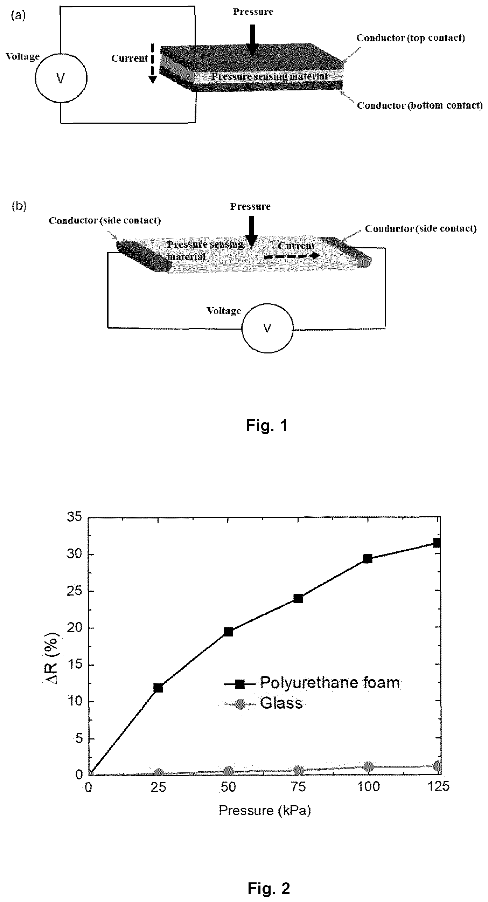

The tactile sensor of the invention presents an enhancement of the pressure sensitivity up to two orders of magnitude, that is by a factor >100 in the pressure range tested (from 0 up to 500 KPa), with respect to state of the art sensors (see Figure 2, which showcases such difference for a sensor according to the invention denoted "polyurethane foam", and a reference sensor denoted "glass" imitating a reference sensor from the literature: [Dai, H. Thostenson et al. ACS Appl. Mater. Interfaces 11, 48370-48380 (2019)]).

The in-plane configuration of the pressure sensor according to the invention, with the direction of the applied pressure being perpendicular to the direction of both the injected current and the measured electrical signal, allows to create ultra-flexible pressure sensors with enhanced sensitivity which in turn allows also longer durability of the sensor. Hence, the present invention proposes a solution to increase the sensitivity of in-plane sensors. Moreover, it was found that the specific use of a flexible non-electrically conductive material in the substrate layer contributed to the longer durability of the in-plane sensor of the invention as compared to conventional out-of-plane sensors.

Moreover, it was found that for the in-plane configuration pressure sensor of the invention, when applying pressure to a piezoresistive material layer (for example a nanocomposite film), the generated electrical signal strongly depends on the substrate on which said film is placed on. Therefore, it was found that it is possible to tune and amplify the response of the sensor by choosing a convenient substrate.

A first aspect of the invention hence refers to a pressure sensor comprising:

    a) a piezoresistive material layer, and
    b) a substrate,

wherein the piezoresistive material layer and the substrate are mounted in an in-plane configuration, with the piezoresistive material layer on top of the substrate,

wherein the piezoresistive material layer has an electrical conductivity higher than $10^{-11}$ S/cm when pressure is not applied on the piezoresistive material layer,

characterized in that the substrate comprises a flexible non-electrically conductive material with an electrical conductivity which is lower or equal to half the conductivity of the piezoresistive material layer, with a flexural strength lower than 100 MPa as measured for a substrate material of rectangular shape and dimensions 7.5x2.5x0.6 cm by ASTMD790/ISO178 using a 3-point flexural test.

Note that the conductivity of the piezoresistive material when pressure is not applied (higher than $10^{-11}$ S/cm), increases upon the application of pressure.

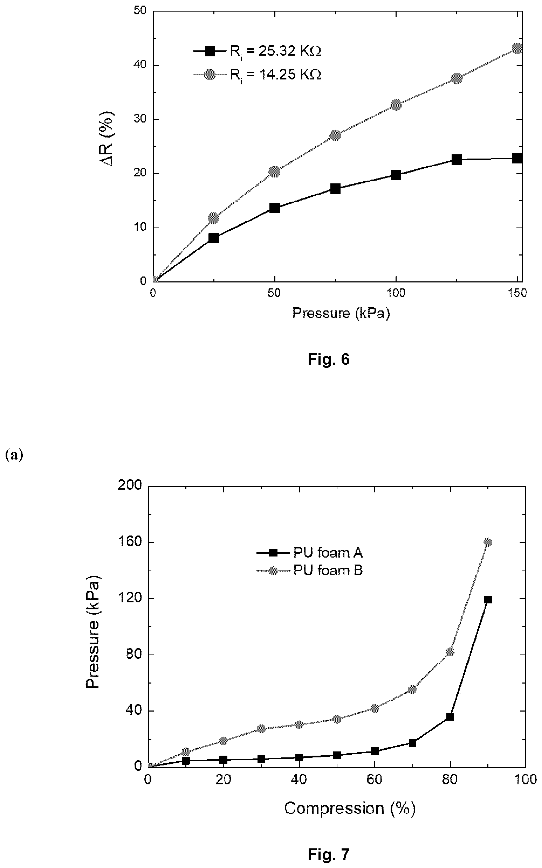

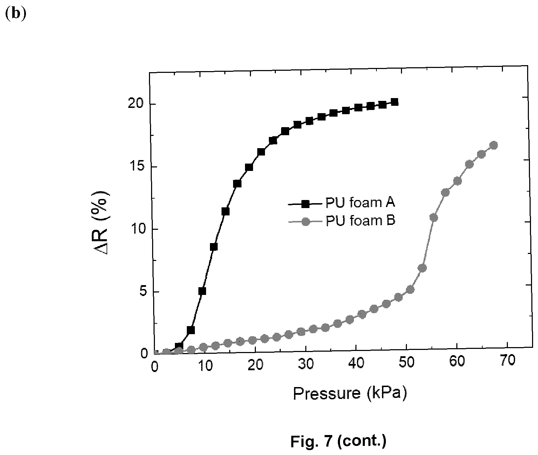

The in-plane configuration eliminates the use of additional metallic pieces such as cables and/or electrodes placed on top of the piezoresistive material layer, while the in-plane combination of the piezoresistive material with the substrate according to the invention allows to increase the sensitivity at least 100 fold (see Figures 2 and 7), preferably up to 125 fold.

In fact, it was surprisingly found that when combining both a piezoresistive material and a substrate according to the invention, both in an in-plane configuration, for the same piezoresistive material (for example Velostat®), when using a flexible non-electrically conductive and compressible polymer as the substrate according to the invention (for example a polyurethane foam) on which the piezoresistive material is mounted, as compared to a another reference substrate not according to the invention (for example glass) on which the piezoresistive material is mounted, there was a considerable increase of the sensitivity to the applied pressure on the piezoresistive material, so that considerable increases of the normalized electrical resistance (ranging from 0% up to 40% in some cases) were induced in the piezoelectric material with the application of increased pressure on the piezoresistive material (preferably an applied pressure between 0 kPa to 500 kPa on top of the piezoresistive material). Such resistance increases for the same applied pressure when using other substrates (for example glass) were only up to 1 %, that is at least an order of magnitude lower.

In terms of sensitivity, S is defined as the variation of the normalized electrical resistance $\Delta R$ when varying the pressure in an interval $\Delta P$, S=$\Delta R/\Delta P$, for which the in-plane sensor of the invention reaches S values up to 0.010kPa$^{-1}$ for some $\Delta P$, thanks to the use of a compressible substrate, whereas S is only 0.00008 kPa$^{-1}$ if the substrate is glass in a comparative example not according to the invention (in both cases the same piezoresistive film was used). As such, the sensor of the invention is able to increase the sensitivity of a piezoresistive film by two orders of magnitude, more specifically, up to a factor 125.

Moreover, the achieved sensitivity values with the sensor of the invention ($0.010 \text{kPa}^{-1}$) are 60 times larger than the sensitivity of state-of-the-art piezoresistive sensors which use optimized piezoresistive films [Dai, H. Thostenson et al. ACS Appl. Mater. Interfaces 11, 48370-48380 (2019)]

This considerable improvement in the modulation of electrical resistance of the piezoresistive material for the sensor of the invention, achieved just by changing the non-electrically conductive substrate on which the piezoresistive material is mounted, is very surprising, given that the piezoresistive material used is the same regardless of the change of substrate. In fact, it is unexpected that just by changing the non-electrically conductive substrate onto which the piezoresistive material is mounted, there is such a considerable improvement in the sensitivity in the electrical measurement of the piezoresistive material as high as two orders of magnitude.

All in all, the combination of the at least one piezoresistive material layer and at least one substrate, in an in-plane configuration, according to the invention, results in a highly flexible and highly sensitive pressure sensor.

In a preferred embodiment, the piezoresistive material layer is in the form of a film which has a ratio of width to thickness of at least 10:1 width/thickness, and a ratio of length to thickness of at least 10:1 length/thickness. These ratios allow the piezoresistive material to deform to a higher extent upon the application of pressure with high flexibility, without cracking or breaking.

Moreover, the piezoresistive material layer being in the shape of a film, provides advantages in terms of higher flexibility, as well as higher electrical resistance modulation via the non-electrically conductive substrate (as compared to a non-film piezoresistive material which shows lower capacity for electrical resistance modulation).

In another preferred embodiment of the pressure sensor according to the invention, the piezoresistive material layer has a thickness between 0.001 mm and 10 mm, preferably between 0.1 mm and 1 mm. These particular thicknesses, especially within the range 0.1-1mm, also contribute to the ability of the film to have high flexibility and deform to a higher extent upon the application of pressure, without cracking or breaking.

More particularly, in the present invention, "piezoresistive material layer" refers to an electrically conductive material which has an overall electrical conductivity higher than $10^{-11}$ S/cm when pressure is not applied on it. Additionally, this piezoresistive material layer may comprise additional materials and/or additives.

Additionally, this piezoresistive material layer may be a composite material comprising a matrix material and at least a reinforcement material embedded into the matrix.

The piezoresistive material layer is hence an electrically conductive layer, and more precisely is made of a material (for example a composite material as a non-limiting example of material) whose resistivity varies according to the external pressure applied on the layer.

In fact, since the sensitivity of the sensor according to the invention is increased by the combination in an in-plane configuration of the piezoresistive material and the substrate according to the invention, the sensitivity of any piezoresistive material already known for other kinds of pressure sensors different than the invention, is also increased thanks to the particular configuration proposed in this invention.

The material of this piezoresistive material layer (or the matrix of the composite material if the piezoresistive material layer is a composite material) may hence be any material flexible and bendable enough not to crack under pressures up to 100 MPa (according to flexural strength tests based on standards ISO178 and ASTMD790). In fact, any piezoresistive material (or matrix of the piezoresistive material) may be used which meets these conditions.

In a preferred embodiment, the piezoresistive material layer is a composite material and comprises a matrix material made of at least a non-electrically conductive flexible material selected from non-conductive polymers and textile materials with electrical conductivity lower than 0.1 S/cm and a flexural strength lower than 100 MPa; and an electrically-conductive reinforcement material embedded in the matrix with conductivity higher than 1 S/cm selected from microparticles, nanoparticles, and their combinations, made from metallic or semiconductor elements, carbon-based nanomaterials (e.g. graphene, carbon nanotubes, etc.), conductive polymers, organic conductive compounds, and their combinations.

The matrix material may also be a combination of at least a polymer and at least a fiber material.

The piezoresistive material, besides varying its resistivity with applied external pressure, also presents a variation of resistivity with temperature, which can give problems on the accuracy or reliability of the sensor measurements depending on the temperature or temperature variation.

For this reason, in another preferred embodiment, the piezoresistive material layer has a low temperature coefficient of resistivity. In other words, the piezoresistive material layer presents a low variation of electrical resistivity with temperature. Given that the electrical resistivity of piezoresistive materials varies with temperature, using a piezoresistive material layer made of a material or materials with low variation of electrical resistivity with temperature, allows to manufacture a more accurate pressure-sensor which is not as affected by temperature variations in the environment, given that during the measurement with the pressure sensor such temperature variations are not too high. For this reason, it is also optimal to use the pressure sensor at constant temperature for better accuracy.

In another preferred embodiment, the piezoresistive material layer comprises electrically-conductive microparticles and/or nanoparticles with a size comprised between 1 nm and 0.1 mm, and an electrical conductivity of at least 1 S/cm, preferably of at least $10^2$ S/cm. The microparticles and/or nanoparticles are preferably embedded in a polymeric matrix.

These electrically-conductive microparticles and/or nanoparticles can form a film, or be the reinforcing material described previously in which case they and are embedded in the matrix, preferably the matrix material being a polymer or a textile material, more preferably a polymer. Preferably the electrically-conductive microparticles and/or nanoparticles are made from metallic elements or semiconductor elements selected from nickel, copper, gold, silver, titanium, silicon, germanium, selenium, tellurium, GaAs, GaN, GaP, semiconductors from groups III-V, and their combinations, or a conductive polymer selected from PEDOT (poly(3,4-ethylenedioxythiophene)), polyacetylene, polypyrrole, polythiophenes, polyaniline, poly(p-phenylene vynilene), poly(3-alkythiophenes, and their combinations, or carbon-based materials selected from carbon nanotubes, graphene, fullerene, and carbon black, and their combinations.

It was found that the combination of conductive microparticles and/or nanoparticles according to the invention embedded within a non-conductive flexible material according to the invention, results in a composite piezoresistive material layer of both high flexibility (for example with a bending strength of at least 10 kPa and up to 100 MPa) and considerable pressure sensitivity at different pressure ranges (for example with sensitivity of at least 0.1 kPa$^{-1}$ and up to 2000 kPa$^{-1}$).

The microparticles and/or nanoparticles may have any shape, for example spherical, elliptical, rectangular, ring-shaped, rod-shaped, including irregular and regular planar or non-planar geometries. The microparticles and/or nanoparticles may also be shaped as microwires or nanowires, micro or nano zigzags or micro- or nano helices.

In another preferred embodiment, the matrix material is a polymer selected from polyethylene terephthalate (PET), polytetrafluoroethylene (PTFE), polyethylene naphthalate (PEN), polydimethylsiloxane (PDMS), polycarbonate (PC), polyurethane (PU), silicone, polyethylene (PE), or a textile material selected from polyester, nylon, cotton, aramid, PBO (PBO refers to the synthetic polymer poly(p-phenylen-2,6-benzobisoxazol), also known as "Zylon") or any of their combinations; the matrix, and more preferably the textile material can be in form of fibers or hydrogel. The matrix material may also be a combination of at least a polymer and at least a fiber material.

In another preferred embodiment, the reinforcement material are microparticles and/or nanoparticles made from metallic elements or semiconductor elements selected from nickel, copper, gold, silver, titanium, silicon, germanium, selenium, tellurium, GaAs, GaN, GaP, semiconductors from groups III-V, and their combinations, or a conductive polymer selected from PEDOT (poly(3,4-ethylenedioxythiophene)), polyacetylene, polypyrrole, polythiophenes, polyaniline, poly(p-phenylene vinylene), poly(3-alkythiophenes, and their combinations, or carbon-based materials selected from carbon nanotubes, graphene, fullerene, and carbon black, and their combinations.

The combination of these particular matrices and these particular reinforcement materials (such as for example conductive particles) is advantageous. On the one hand, these reinforcements (e.g. conductive particles) can conduct electricity but do not expand upon applying any pressure on them. On the other hand, the flexible matrix material cannot conduct electricity but expand when applying a pressure on it. The combination of both these reinforcements (e.g. electrically conductive particles) and these matrices allows both the reinforcements (e.g. conductive particles) and the matrix to expand, and vary the electrical current through these materials, thus detecting pressure changes applied on the resulting piezoresistive composite material. Hence, by means of a change in conductivity/resistivity, the piezoelectric material according to the invention allows to detect changes in pressure in terms of electrical resistivity.

Note that some materials present better pressure sensitivity for the pressure sensor of the invention when the pressure is subjected to low externally-applied pressures, in the pressure range <50 kPa; while other materials present better pressure sensitivity for the pressure sensor of the invention when the pressure is subjected to high externally-applied pressures ≥50kPa. In fact, the optimization of the material depending on whether it is to be used for low or high externally-applied pressures, depends on a multitude of factors such as the concentration of reinforcement particles, the elasticity and porosity of the matrix (when such material is a composite material), etc. As a preferred and non-limiting embodiment.

Low-pressure sensors applications include "gas and liquid flow pressure sensors" for all kinds of industrial sectors including the automotive sector and medical applications such as ventilators, anesthesia machines, hemodialysis); "consumer electronics pressure sensors" for example used to measure suction in vacuum cleaners, or for acoustic and noise measurement); "professional sports pressure sensors" for example to measure altitude in skydivers or climbers, etc.

High-pressure sensors applications include "automotive pressure sensors" for passenger safety or airbag regulation; "medical pressure sensors" for health monitoring in a number of medical conditions, skin grafts, burn injuries, etc.; "submersible pressure sensors" in liquid tanks, "touch pressure sensors" in robots; "consumer electronics pressure sensors" for augmented and virtual reality; "elderly care pressure sensors" for monitoring their possible falls, etc.

In a more preferred embodiment, the concentration of microparticles and/or nanoparticles within the piezoresistive material layer is between 1% wt. and 95% wt. with respect to the total weight of the piezoresistive material layer, preferably between 2% wt. and 50% wt. It was surprisingly found the by varying the % wt. of nanoparticles within the flexible material, the sensitivity to the externally applied pressure of the tactile sensor can be optimized within the intended pressure range of use.

In a yet even more preferred embodiment, the piezoresistive material layer is a composite material which comprises a polyethylene matrix and conductive carbon microparticles and/or nanoparticles embedded in the matrix selected from carbon nanotubes, graphene, fullerene, and/or carbon black. This combination results in a piezoresistive material layer of high properties in terms of flexibility, preferably having a flexural strength of 20-50 MPa, even more preferably 50 MPa, and pressure sensitivities as follows:

     i) -0.001- 0.005 kPa$^{-1}$ for sensors in an out-of-plane configuration.
     ii) ~0.00008-0.00017 kPa$^{-1}$ for sensors measured in the standard in-plane configuration.
     iii) -0.010 kPa$^{-1}$ for sensors measured in an in-plane configuration using the invention reported hereby.

In another preferred embodiment, the piezoresistive material is "Velostat®", namely a particular polyethylene-carbon composite made of conductive carbon nanoparticles embedded within a polyethylene matrix, whose technical features are described in [A. Dzedzickis et al. "Polyethylene-Carbon Composite (Velostat®) based Tactile Sensor, Polymers 2020, 12(12), 2905]".

The substrate onto which the piezoresistive layer or film is placed according to the invention, can be any flexible and non-electrically conductive material.

In a preferred embodiment, the non-electrically conductive substrate is a polymer, foam, rubber, or textile material, with an electrical conductivity equal or lower than half of the conductivity of the piezoresistive material layer when pressure is not applied on it (preferably a substrate of conductivity equal or lower than 0.1 S/cm), and with a value of the Poisson ratio larger than 0.001 when pressure is perpendicularly applied on the substrate surface.

In a more preferred embodiment, the substrate is a polymer selected from polystyrene (PS), polycarbonate (PC), polydimethylsiloxane (PDMS), polyethylene (PE), polytetrafluoroethylene (PTFE), polyurethane (PU), thermoplastic polyurethane (TPU), polyvinyl chloride (PVC), polyether, polyester, and their combinations, foams or rubbers; or a textile material selected from cotton, polyester, nylon, aramid, PBO, and their combinations (although other known materials in the state of the art with this property may also be used). These materials when used as a substrate, present a good combination of electrical (non-conductive enough) and mechanical properties (flexible and resistant enough), preferably an electrical conductivity not higher than 0.1 S/cm, and preferably a flexural strength lower than 100 MPa.

All the aforementioned materials for both the substrate as well as for the matrix of the piezoresistive material layer, according to the invention, may be in any form or shape, for example as fibers or hydrogels as non-limiting examples.

In another preferred embodiment, the substrate has a Poisson's ratio higher than 0.001. Preferably the substrate with Poisson's ratio higher than 0.001 when pressure is perpendicularly applied on the substrate surface.

Using such polymers with a Poisson's ratio higher than 0.001 as a substrate, presents the advantage that the expansion of the substrate is maximized in the perpendicular direction onto which the pressure is applied (i.e. the in-plane direction), and hence the piezoresistive material located on top of the substrate also expands, hence increasing its pressure sensitivity, hence increasing the pressure-sensitivity of the resulting pressure-sensor.

The Poisson ratio of the substrate material is not limited according to the invention, but rather materials of any ratio may be used, which allows to optimize the sensor sensitivity to pressure according to the range of pressures of use of interest.

In another preferred embodiment, the substrate material has a low Compression Load Deflection at 50% compression, ranging from 0.01 kPa to 50 kPa, preferably between 0.1 kPa to 20kPa; or a high Compression Load Deflection at 50% compression, ranging from 50 kPa to 50 MPa, preferably between 100 kPa to 10MPa. The compression of a material depends on factors such as its form (for example as a foam or a rigid solid), or its density, among others.

When the range of pressure of use of interest is low (<50 kPa) a low "Compression Load Deflection at 50% compression" (0.01-50kPa, preferably between 0.1-20kPa) material (for example a foam) is preferably used, while when the range of pressure of use of interest is high (>50kPa) a higher "Compression Load Deflection at 50% compression" (50kPa-50MPa, preferably between 100KPa-10MPa) material (for example a flexible polymer with a low porosity) is preferably used. This allows to optimize a higher sensitivity of the tactile sensor at low pressures (<50 kPa) and at high pressures (>50-kPa) of use respectively.

In another preferred embodiment, the substrate is made of a polymer with a low degree of viscoelasticity as defined by a recovery time of the substrate polymer lower than 2 seconds; or made of a polymer with a high degree of viscoelasticity as defined by a recovery time of the substrate polymer with a recovery time higher than 2 seconds.

The viscoelasticity in the present invention is defined and quantified as the time it takes for a material to recover back to its original position once the pressure which initially caused the deformation stops. The recovery time is hence such time to come back to its original position from the moment the pressure stops.

The recovery time (seconds) which quantifies such viscoelasticity according to the invention can be measured according to any standard test used to measured recovery time. A non-limiting example of such a standard test is as follows: 1) pressing the material with an indenter down to 50% of its thickness; 2) releasing the indenter (and hence the pressure) from the material, and 3) measuring the time passed from the release of the pressure until the material recovers its initial thickness. The recovery time is hence defined according to the % of initial thickness of the material that was compressed with the indenter.

Alternative ways of measuring such recovery times related to the viscoelasticity might also include creep testing (subjecting the material to a constant load and measuring the amount of deformation over time); stress relaxation testing (subjecting the material to a constant deformation and measuring the amount of stress over time) or ball rebound testing.

When the substrate is made of a polymer with a low degree of viscoelasticity (with recovery time lower than 2 seconds, preferably lower than 1 second), it allows to obtain a less delayed (nearly instantaneous) response between the externally-applied pressure on the film and the generated electrical signal by the piezoresistive material. This allows to immediately or almost immediately produce a change in the measured electrical signal upon the application of the pressure, and hence allows an immediate response in the presence/absence of any change in pressure in the piezoresistive material.

When the substrate is made of a polymer with a high degree of viscoelasticity (with recovery time higher than 2 seconds, preferably higher than 5 seconds), it allows to obtain a delayed response between the externally-applied pressure on the film and the measured electrical signal by the piezoresistive material, and hence allows to obtain a delay or "memory" response in the presence/absence of any change in pressure in the piezoresistive material.

Note that viscoelastic deformations have a temporal dependency, and hence their response to any externally-applied pressure will depend on the instantaneously applied pressure, on how fast the pressure is applied, as well as on the amount of time the pressure is applied.

The found dependency of both properties of the substrate (firmness and viscoelasticity) on the tactile sensor response (how the electrical signal varies with the externally-applied pressure), as well as on the temperature of service, allows to tailor the response of the sensor for different applications. By firmness it is meant the pressure at which the substrate is compressed down to 50% of its thickness (compression load deflection at 50% compression).

For example, materials with porosity higher than 50% which are not viscoelastic (has a recovery time lower than 2 seconds) and have a relatively low compression load deflection (up to 25 kPa) are useful for low pressure sensor applications up to 100 kPa of pressure; while on the other hand material with porosity lower than 50% which have a high compression load deflection (higher than 100 kPa) are useful for medium and high pressure sensor applications above 100 kPa of pressure. Non-limiting examples of such materials may even have the same composition.

For example PDMS or polyurethane foam with porosity higher than 50% which are not viscoelastic (has a recovery time lower than 2 seconds) and with a relatively low compression load deflection (<25 kPa) are useful for the aforementioned low pressure sensor applications up to 100 kPa, while PDMS or polyurethane foam with porosity lower than 50% and with a relatively high compression load deflection (>100 kPa) are useful for the aforementioned low pressure sensor applications up above 100 kPa.

Note that the substrate as previously defined according to the invention, is preferably a flexible and non-electrically conductive polymer with a flexural strength lower than 100 MPa, and with an electrical conductivity equal or lower than the conductivity of the piezoresistive material layer when pressure is not applied on it (preferably equal or lower than 0.1 S/m).

The sensor according of the invention provides high repeatability since the piezo resistive layer better adapts nanometrically to the flexible substrate, and high accuracy because in the sensor the electrical resistance varies monotonically with applied pressure, which helps in extrapolating or extracting more accurately the pressure and/or electrical resistance value yielded from the sensor.

The term "flexible material" according to the invention refers to any material which does not crack under flexural strengths below 100 MPa. The fact that the material does not crack means that it recovers it initial shape upon removing the pressure.

The "bending strength" or "flexural strength" according to the invention refers to the ability of a material to resist deformation under a flexural load, and in this patent application, is defined as the maximum load (MPa) a material can withstand before breaking or being irreversibly deformed.

The "flexural strength (MPa)" according to the invention has been measured using the standard ASTM D790 or ISO 178 (3 point flexural test), by using a testing equipment "Zwick/Roell 3-point flexure test kit", with a specimen of the material of dimensions 7.5x2.5x0.6 cm. Alternative ways of measuring the flexural strength might also include four-point flexural tests, etc.

The "electrical conductivity (S/cm)" according to the invention has been measured in a 4-point configuration, measuring the voltage drop across the material with a voltmeter (distance between electrodes 2 cm) when applying a constant current 0.1 mA with a sourcemeter. Alternative ways of measuring the electrical conductivity (S/cm) might also include the use of lock-in amplifiers, impedance analyzers, the 2-AC bipolar method, an electromagnetic induction method, etc.

The thickness, width, and length (mm) according to the invention has been measured using a "caliper". Alternative ways of measuring such dimensions (mm) might also include a ruler, a measuring tape, or a micrometer screw gauge.

The size (nm) of the microparticles and/or nanoparticles according to the invention has been measured using a scanning electron microscope (SEM), using 5 kV or 10 kV as acceleration voltage. Alternative ways of measuring such sizes (mm) might also include atomic force microscopy, transmission electron microscopy, etc.

The "Compression Load Deflection at 50%", according to the invention is measured using a compression deflectometer (DMA tool) which applies a variable force over an area of 5 cm$^2$ until the thickness of the material is compressed by 50%. Measurements are conducted at 25°C on a specimen of dimensions 2.5x2.5x0.6 cm. Alternative ways to measure the "Compression Load Deflection at 50%" would be using a compression testing machine with different load cells or compression platens, deflection gauges, etc.

Last but not least, also notice that any of the pressure sensors according to any of the embodiments of the present invention may be a tactile pressure sensor, that is a pressure sensor in which the pressure is provided by touch.

Unless otherwise defined, all technical and scientific terms used in this patent application have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples, drawings and sequence listing are provided by way of illustration and are not intended to be limiting of the present invention.

**BRIEF DESCRIPTION OF THE DRAWINGS**

**Fig.1.** (a) Diagram of an out of plane configuration measurement of a piezoresistive sensor. (b) Diagram of an in-plane configuration measurement of a piezoresistive sensor. The light gray component of the diagrams represents the piezoresistive material (or active sensitive material, or pressure sensing material), while the darker component represents the conductor material (top and bottom contact in Fig. 1a; side contacts in Fig. 1b) connected to such piezoresistive material. Connectors are needed to apply and measure an electrical signal. The continuous arrow on top of the piezoresistive material and perpendicular to its surface represents the externally-applied pressure on the sensor, while the dashed arrow in the same direction (a) or in opposite direction (b) represents the electrical current flowing perpendicular (a) or parallel (b) to the plane of the piezoresistive film, parameter that varies due to the application of the external pressure.

**Fig. 2.** Percentage of increase in the normalized electrical resistance (ΔR) of the piezoresistive material (Velostat®) of the tactile sensor, with respect to the externally applied pressure on a surface (pressure in kPa), for both a sensor according to the invention which consists of the piezoresistive material Velostat® mounted on top of a soft polyurethane foam substrate of compression load Deflection at 50% of 41 kPa ("polyurethane foam"), and a reference sensor outside the scope of the invention which consists of the piezoresistive material velostat® mounted on top of a glass substrate ("glass").

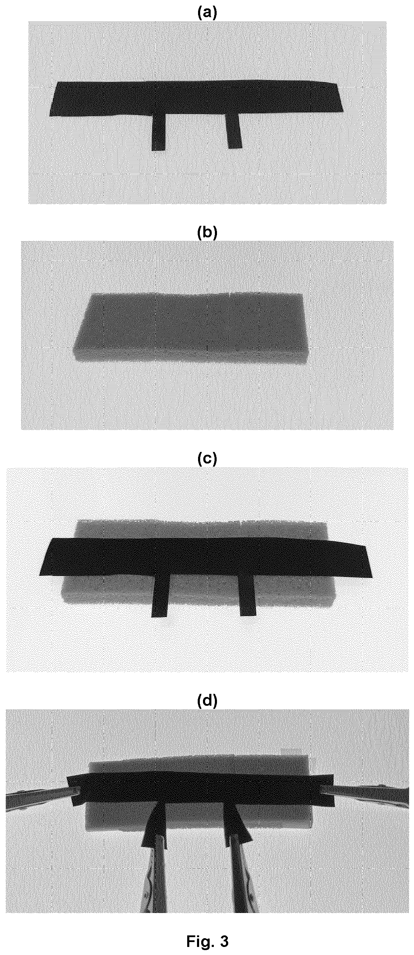

**Fig. 3.** Pressure sensor (tactile pressure sensor) according to the invention for which the electrical response was plotted in Fig. 2 ("polyurethane foam"), wherein it is shown (a) piezoresistive material Velostat®, (b) polyurethane foam of compression load Deflection at 50% of 41 kPa, (c) mounted tactile sensor according to the invention, (d) mounted tactile sensor with attached cables for the measurement of the electrical resistance of the piezoresistive material in a 4 terminal configuration upon application of pressure on the sensor.

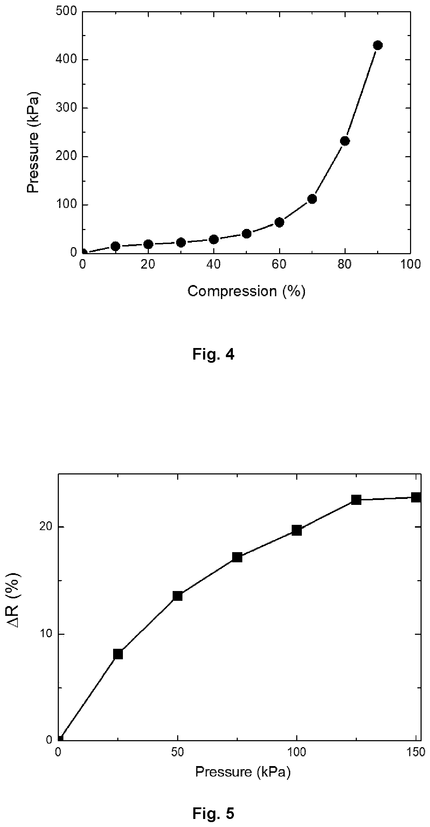

**Fig. 4.** Compressibility test of the 6 mm thick polyurethane foam sensor of Figure 2 to different thickness percentages, with respect to the externally applied pressure on the surface (pressure in kPa). The compression load Deflection at 50% compression is 41kPa.

**Fig. 5.** Figure equivalent to Figure 2, with the exception that the substrate used in this case is polyethylene foam (instead of polyurethane foam).

**Fig. 6.** Figure equivalent to Figure 5, with the difference that the ΔR is shown for two piezoresistive films made from Velostat® placed on the same substrate, of initial resistance $R_i$ 14.25 KΩ and 25.32 KΩ respectively.

**Fig. 7.** (a) Compressibility test of two different, 6 mm thick commercial polyurethane (PU) foams (named A and B) to different percentages between 0% and 90% of the initial foam thickness, with respect to the externally applied pressure on the surface (pressure in kPa). Foams A and B are particularly foams CONFOR™ EG CF-45-EG and ISOLOSS ® LS-1000LM, respectively. (b) Percentage of increase in the normalized electrical resistance ($\Delta R$) of the piezoresistive material (Velostat®) of the tactile sensor mounted on top of the two different polyurethane (PU) foams (named A and B) of panel (a), with respect to the externally applied pressure on a surface (pressure in kPa).

**EXAMPLES**

To demonstrate the concept, the resistance of a nanocomposite sheet (piezoresistive material) has been measured using two substrates onto which the piezoresistive material layer is mounted, both substrates having very different properties: a rigid glass piece (a comparative pressure sensor not according to the invention); and a selected ~6mm thick commercial polyurethane foam ISOLOSS ® LS-1000LM (with Compression Load Deflection at 50% of 41 kPa) according to the invention.

Hence, two pressure sensors were prepared:

- a pressure sensor according to the invention with a commercial piezoresistive material (Velostat®) on top of the commercial foam substrate; and
- a comparative pressure sensor not according to the invention with the commercial piezoresistive material (Velostat®) on top of a rigid glass piece.

The measurement configuration of both pressure sensors is an in-plane configuration as that shown in Figure 1b, wherein the substrate is located below the piezoresistive material layer (that is, below the "pressure sensing material" shown in Figure 1b), and wherein metal interconnects for electrical measurement on both sides of the piezoresistive material are present. In this configuration, the pressure is applied perpendicularly to the pressure sensing material, but the electrical current flows along the material and thus in the direction perpendicular to that of the applied pressure (that is, parallel to the pressure sensing material. In contrast, Figure 1a refers to another type of measurement configuration of the pressure sensor known as an "out-of-plane" configuration (not according to the pressure sensor of the present invention).

It was surprisingly found that, despite both substrates being non-electrically conductive, the response of the nanocomposite sheet on top of these two substrates is very different (see Figure 2).

The piezoresistive material used is the known commercial piezoresistive material "Velostat®", that is a material made of carbon microparticles and/or nanoparticles embedded within a polyethylene film. A piece of this material is shown in Figure 3a.

As mentioned above, the substrate used according to the invention is a polyurethane foam with Compression Load Deflection at 50% of 41 kPa, and is shown in Figure 3b.

In order to manufacture the pressure-sensor from the above piezoresistive material (Velostat®) and substrate (polyurethane foam with Compression Load Deflection at 50% 41 kPa), the piezoresistive material was laminated over the substrate, being the result the pressure-sensor shown in Figure 3c.

In order to be able to measure the resistance variation with the external application of pressure on the central part of the piezoresistive material of the sensor, two cables were connected to the two sides of the piezoresistive material of the sensor (see Figure 3d) and an electrical current of I = 0.1 mA was applied. Two other cables were connected to the two central contacts of the piezoresistive material of the sensor (see Figure 3d) to measure the potential drop between them V. The resistance R with the application of an external pressure on the central part of the piezoresistive material of the sensor was then extracted as R=V/I. This configuration of the pressure-sensor allows to directly apply pressure on the surface of the piezoresistive material, pressure which was applied on its center.

In the case of using glass slide as the substrate (rigid), a very small response was observed (<1% $\Delta R$).

However, when the piezoresistive film was placed on top of the selected foam as the substrate, the normalized electrical response $\Delta R$ to the externally-applied pressure was much higher (more than an order of magnitude higher, >30%). Such behavior is summarized in Figure 2, where different pressures have been applied to the piezoresistive material placed on these two substrates.

In Figure 2, for each of the 2 tactile sensors made of the couple piezoresistive material/substrate (one sensor made of Velostat®/glass; another sensor made of Velostat®/foam), the normalized change of electrical resistance with respect to the applied pressure is plotted, wherein the electrical resistance is calculated according to the following formula (1):

$$\Delta R = (R - R_i) \cdot 100 / R_i \quad (1)$$

Wherein $R_i$ refers to the initial electrical resistance of the piezoresistive material (Velostat®) when no pressure (weight) is applied to the sensor in this case, and R is the particular electrical resistance of the Velostat® at each applied pressure (weight). Hence, the pressure in Figure 2 is plotted in the X axis as the pressure applied on top of the piezoresistive material of the sensor, ranging from 0 kPa to 125 kPa. The behavior depending on whether the substrate below the Velostat® is glass or polyurethane foam is very different:

> **Reference sensor:** When glass (a non-compressible surface) is used as the substrate onto which the Velostat® piezoresistive material is mounted, the change in the resistance of the Velostat® with different applied pressures is almost negligible (only a change lower than 1% in electrical resistance is perceived from 0 to 125 kPa).

> **Sensor of the invention:** In contrast, when polyurethane foam (a compressible surface) is used as the substrate onto which the Velostat® piezoresistive material is mounted, the change in the resistance of the Velostat® with different applied pressures is considerable (the electrical resistance increases up to >30% when applying pressures > 100kPa, as seen in Fig. 2). Surprisingly, the increase of the electrical resistance with weight is considerably higher (an order of magnitude higher, or around ten-fold higher) when using a flexible non-electrically conductive polymer as the substrate (polyurethane foam) as compared to a reference substrate (glass). Hence, the resulting sensor is not only highly sensitive to pressure, but also highly flexible.

Figure 4 shows a full compressibility test of the 6 mm thick polyurethane foam used in the sensor of Figure 2. In Figure 4, the polyurethane foam is compressed to different percentages, which in turn causes the piezoelectric material resistance to vary in dependence of the compression. 50% compression is achieved in this foam for a pressure of ~41 kPa.

**Additional examples of combinations of materials of the invention:**

- Any electrically conductive nanoparticle or thread (metal or semiconductor nanoparticles, carbon nanotubes, graphene, etc.) embedded in a silicone-type elastomer (for instance, polydimethylsiloxane (PDMS) as piezoresistive material and polyurethane PU foam or rubbers as substrates.

- Velostat® as piezoresistive material and polystyrene PS, PS foams, PDMS, PDMS foam or polyvinyl Chloride (PVC) foam or rubbers as substrates.

- Any electrically conductive nanoparticle or thread (metal or semiconductor nanoparticles, carbon nanotubes, graphene, conductive organic compounds, etc.) embedded in a polyester sheet (for instance, polyethylene naphthalate, or PDMS) as piezoresistive material and PU, PS, PDMS or PVC foam or rubbers as substrates.

- Any electrically conductive nanoparticle or thread (metal or semiconductor nanoparticles, carbon nanotubes, graphene, conductive organic compounds, etc.) embedded in a polycarbonate (PC) sheet as piezoresistive material and PU, PS, PDMS or PVC foams or rubbers as substrates.

- Any electrically conductive nanoparticle or thread (metal or semiconductor nanoparticles, carbon nanotubes, graphene, conductive organic compounds, etc.) embedded in a polytetrafluoroethylene (PFTE) sheet as piezoresistive material and PU, PS, PDMS or PVC foams or rubbers as substrates.

- Any electrically conductive nanoparticle or thread (metal or semiconductor nanoparticles nanoparticles, carbon nanotubes, graphene, conductive organic compounds, etc.) embedded in a polyethylene teraphthalate (PET) sheet as piezoresistive material and PU, PS, PDMS or PVC foams or rubbers as substrates.

- Any electrically conductive nanoparticle or thread (metal or semiconductor nanoparticles, carbon nanotubes, graphene, conductive organic compounds, etc.) embedded in fabric such as nylon, cotton or PBO fibers as piezoresistive material and PU, PS, PDMS or PVC foams or rubbers as substrates.

**Demonstration of working of the sensor with other substrate materials (polyethylene foam):**

As aforementioned, materials that can be used for the sensor of the invention are multiple (both for the piezoresistive layer as well as for the substrate). In order to confirm this, we demonstrate how a significant $\Delta R$ is also measured when the piezoresistive material Velostat® is placed on top of a substrate made from a different material: polyethylene foam (see Figure 5).

**Tuning the sensor response $\Delta R$ with distinct piezoresistive films**

As in any piezoresistive sensor (measured in the in-plane or out-of-plane configuration), $\Delta R$ of the sensor of the invention can also be tuned by varying the electrical properties of the actual piezoresistive film. Such electrical properties depend on the resistance of the sensor in the absence of pressure or weight $R_i$. Ultimately, $R_i$ depends on the transport phenomena occurring in these composite films and thus on the concentration of conductive microparticles and/or nanoparticles within the piezoresistive material layer.

The dependence of the sensor of the invention on $R_i$ is exemplified in Figure 6, which shows $\Delta R$ for two piezoresistive films made from Velostat ® placed on the same substrate: PE foam. In particular, $R_i$ of these films is different (14.25 and 25.32 K$\Omega$), and thus the normalized resistance variation when applying a pressure $\Delta R$ is also different in both sensors, showing a maximum of 43% and 23% for the foams with $R_i$ 14.25 and 25.32 K$\Omega$, respectively. The sensitivity S of the foam with lower $R_i$, will also be larger.

**Tuneability of the sensitivity of the sensor of the invention for applications at different pressure ranges:**

The sensor of the invention consists of two layers, one piezoresistive (electrically conducting) and one non-electrically conductive substrate. In the following, we demonstrate that its sensitivity can be enhanced at selected and different pressure ranges on demand, just by changing the compressibility of the non-electrically conductive substrate.

In fact, it is remarkable and surprising that the degree of compressibility of a non-electrically conductive substrate is able to determine the electrical response $\Delta R$ measured in the adjacent piezoresistive layer. Such novel finding demonstrates the easy tuneability and straightforward adaptability of the sensor of the invention for applications for a wide range of applications requiring different pressure ranges.

Figure 7a shows a compression test (pressure applied to compress) of two different polyurethane (PU) foams (named A and B) between 0% and 90%. From this graph, one can extract a Compression Load Deflection at 50% Compression of 8 kPa (foam A) and 41 kPa (foam B). Thus, foam A is easier to compress than foam B.

As depicted in Figure 7b, foams which are harder to be compressed (foam B in this case) show a larger sensitivity S (equivalently, increase of $\Delta R$), at larger pressures. In this particular case, $\Delta R$ changes notably (>10%) in a pressure interval $\Delta P$ between 5 and 20kPa for foam A ( i.e. S reaches a value of -0.01 kPa$^{-1}$ between 5 to 20kPa) ; whereas $\Delta R$ changes notably (>10%) in a pressure interval $\Delta P$ between 50 and 70kPa for foam B (i.e. S reaches a value of 0.01 kPa$^{-1}$ in the pressure interval 50 to 70kPa).

Finally, it is worth noting that the aforementioned sensitivity values of ~0.01 kPa$^{-1}$ are:

- Up to a factor 125 larger than sensitivity values done in the same piezoresistive film, but placing it on a non-compressible substrate such as glass (see Figs. 2 and 7, in all cases the same piezoresistive film was used).
- A factor ~ 60 larger than those measured in state-of-the-art in-plane flexible pressure sensors (those which have an optimized piezoresistive film but no compressible substrate, see e.g. -0.00017 kPa$^{-1}$ in [Dai, H. Thostenson et al. ACS Appl. Mater. Interfaces 11, 48370-48380 (2019)]).

**Claims**

1. Pressure sensor comprising:

   a) a piezoresistive material layer, and
   b) a substrate,
   wherein the piezoresistive material layer and the substrate are mounted in an in-plane configuration, with the piezoresistive material layer on top of the substrate, wherein the piezoresistive material layer has an electrical conductivity higher than 10$^{-11}$ S/cm when pressure is not applied on the piezoresistive material layer,
   **characterized in that** the substrate comprises a flexible non-electrically conductive material with an electrical conductivity which is lower or equal to half the conductivity of the piezoresistive material layer, with a flexural strength lower than 100 MPa as measured for a substrate material of rectangular shape and dimensions 7.5x2.5x0.6 cm by ASTMD790/ISO178 using a 3-point flexural test.

2. Pressure sensor according to claim 1 wherein the piezoresistive material layer is in the form of a film which has a ratio of width to thickness of at least 10:1 width/thickness, and a ratio of length to thickness of at least 10:1 length/thickness.

3. Pressure sensor according to claim 1 or 2 wherein the piezoresistive material layer has a thickness between 0.001 mm and 10 mm, preferably between 0.1 mm and 1 mm.

4. Pressure sensor according to any of claims 1 to 3, wherein the piezoresistive material layer is a composite material and comprises a matrix material made of at least a non-electrically conductive flexible material selected from non-conductive polymers and textile materials with electrical conductivity lower than 0.1 S/cm and a flexural strength lower than 100 MPa; and an electrically-conductive reinforcement material embedded in the matrix with conductivity higher than 1 S/cm selected from microparticles, nanoparticles, and their combinations, made from metallic or semiconductor elements, carbon-based nanomaterials, conductive polymers, organic conductive compounds, and their combinations.

5. Pressure sensor according to any of claims 1 to 4, wherein the piezoresistive material layer comprises electrically-conductive microparticles and/or nanoparticles with a size comprised between 1 nm and 0.1 mm, and an electrical conductivity of at least 1 S/cm, preferably of at least 10$^2$ S/cm.

6. Pressure sensor according to any of claims 4 to 5, wherein the matrix material is made from polyethylene terephthalate, polytetrafluoroethylene, polyethylene naphthalate, polydimethylsiloxane, polycarbonate, polyurethane, silicone, polyethylene, polyester, nylon, cotton, aramid, PBO, and their combinations;

7. Pressure sensor according to any of claims 4 to 6, wherein the reinforcement material are microparticles and/or nanoparticles made from metallic elements or semiconductor elements selected from nickel, copper, gold, silver, titanium, silicon, germanium, selenium, tellurium, GaAs, GaN, GaP, semiconductors from groups III-V, and their combinations, or a conductive polymer selected from poly(3,4-ethylenedioxythiophene), polyacetylene, polypyrrole, polythiophenes, polyaniline, poly(p-phenylene vinylene), poly(3-alkythiophenes, and their combinations, or carbon-based materials selected from carbon nanotubes, graphene, fullerene, and carbon black, and their combinations.

8. Pressure sensor according to any of claims 1 to 7, wherein the piezoresistive material layer is a composite material which comprises a polyethylene matrix and conductive carbon microparticles and/or nanoparticles embedded in the matrix selected from carbon nanotubes, graphene, fullerene, and/or carbon black.

9. Pressure sensor according to claims 1 to 8, wherein the substrate has a Poisson's ratio higher than 0.001 when pressure is perpendicularly applied on the substrate surface.

10. Pressure sensor according to claim 1 to 9, wherein the substrate is a polymer selected from polystyrene, polycarbonate, polydimethylsiloxane, polyethylene, polytetrafluoroethylene, polyurethane, thermoplastic polyurethane, polyvinyl chloride, polyetherand their combinations; or a textile material selected from cotton, polyester, nylon, aramid, PBO, and their combinations.

11. Pressure sensor according to any of claims 1 to 10, wherein the substrate material has a low Compression Load Deflection at 50% Compression, ranging from 0.01 kPa to 50 kPa; or a high Compression Load Deflection at 50% Compression, ranging from 50kPa to 50 MPa.

12. Pressure sensor according to any of claims 1 to 11, wherein the substrate is made of a polymer with a low degree of viscoelasticity as defined by a recovery time of the substrate polymer lower than 2 seconds; or made of a polymer with a high degree of viscoelasticity as defined by a recovery time of the substrate polymer higher than 2 seconds.

Fig. 1

Fig. 2

**(a)**

**(b)**

**(c)**

**(d)**

**Fig. 3**

**Fig. 4**

**Fig. 5**

**Fig. 6**

(a)

**Fig. 7**

**(b)**

Fig. 7 (cont.)

| | Europäisches Patentamt European Patent Office Office européen des brevets | **EUROPEAN SEARCH REPORT** | **Application Number** EP 24 38 2736 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 479 585 B2 (SHAW-KLEIN LORI J [US]; MICROPEN TECHNOLOGIES CORP [US]) 9 July 2013 (2013-07-09) * abstract * * embodiment of fig. 3 * ----- | 1-12 | INV. G01L1/18 |
| A | WO 2023/143928 A1 (BASF SE [DE]; BASF CHINA CO LTD [CN]) 3 August 2023 (2023-08-03) * abstract; claims 1-20; figures 1-4 * ----- | 1-12 | |
| A | SOUSA ELIRALDRIN AMORIN ET AL: "Multicomponent polyurethane-carbon black composite as piezoresistive sensor", POLYMER BULLETIN, SPRINGER, HEIDELBERG, DE, vol. 77, no. 6, 31 July 2019 (2019-07-31), pages 3017-3031, XP037110860, ISSN: 0170-0839, DOI: 10.1007/S00289-019-02888-8 [retrieved on 2019-07-31] * the whole document * ----- | 1-12 | |
| A | FATEMA ANIS ET AL: "Investigation of the Long-Term Reliability of a Velostat-Based Flexible Pressure Sensor Array for 210 Days", IEEE TRANSACTIONS ON DEVICE AND MATERIALS RELIABILITY, IEEE SERVICE CENTER, PISCATAWAY, NJ, US, vol. 24, no. 1, 7 December 2023 (2023-12-07), pages 41-48, XP011962548, ISSN: 1530-4388, DOI: 10.1109/TDMR.2023.3340711 [retrieved on 2023-12-08] * the whole document * ----- | 1-12 | TECHNICAL FIELDS SEARCHED (IPC) G01L |

The present search report has been drawn up for all claims

| Place of search | Date of completion of the search | Examiner |
|---|---|---|
| The Hague | 4 December 2024 | Moscelli, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 2736

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2024

| Patent document cited in search report | | Publication date | Patent family member(s) | | Publication date |
|---|---|---|---|---|---|
| US 8479585 | B2 | 09-07-2013 | US | 2012055257 A1 | 08-03-2012 |
| | | | WO | 2012033837 A2 | 15-03-2012 |
| WO 2023143928 | A1 | 03-08-2023 | CN | 118613700 A | 06-09-2024 |
| | | | KR | 20240141280 A | 26-09-2024 |
| | | | WO | 2023143928 A1 | 03-08-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KOHSHMANESCH, F. et al.** *Biosens. Bioelectron*, 2001, vol. 176, 112946
- **KIM Y.** ; **OH, J. H**. *Applied Sciences*, 2020, vol. 10
- **HUA. Q. et al.** *Nat. Commun.*, 2018, vol. 9, 244
- **WANG, S. et al.** *Nature*, 2018, vol. 555, 83-88
- **HOPKINS, M. et al.** *IEEE Sens. J.*, 2020, vol. 20, 6992-7000
- **KANG, S.-K et al.** *Nature*, 2016, vol. 530, 71-76
- **DUAN Y et al.** *Nanomaterials*, vol. 12, 2922
- **PYO, S. et al.** *Advanced Materials*, 2011, vol. 33, 2005902
- **LIU, M.-Y et al.** *Nano Energy*, 2021, vol. 87, 106181
- **DANI H.** ; **THOSTENSON, E. T.** *ACS Appl. Mater. Interfaces*, 2019, vol. 11, 48370-48383
- **TAO, L.-Q. et al.** *ACS Nano*, 2017, vol. 11, 8790-8795
- **KENRY YEO et al.** *Microsyst. Nanoeng*, 2016, vol. 2, 16043
- **KENRY YEO et al.** 2. *Microsyst. Nanoeng.*, 2016, 16043
- **CHANG YANG, J et al.** *Adv. Mater*, 2019, vol. 31, 1904765
- **WON P. et al.** *Adv. Mater*, 2021, vol. 33, 2002397
- **DAI, H. THOSTENSON et al.** *ACS Appl. Mater. Interfaces*, 2019, vol. 11, 48370-48380
- **A. DZEDZICKIS et al.** Polyethylene-Carbon Composite (Velostat®) based Tactile Sensor. *Polymers*, 2020, vol. 12 (12), 2905